# FASCICULE DE BREVET EUROPEEN

(11) **EP 1 826 797 B1**
(45) Date de publication et mention de la délivrance du brevet: **28.03.2012**
(21) Numéro de dépôt: 07102604.1
(22) Date de dépôt: 19.02.2007
(51) Int. Cl.: H01J 1/304, H01J 31/12

(54) **Structure de cathode à nanotubes pour écran émissif**
Kathodenstruktur mit Nanoröhren für Bildschirm
Nanotube cathode structure for emissive screen

(30) Priorité: 22.02.2006 FR 0650601
(43) Date de publication de la demande: 29.08.2007
(73) Titulaire: Commissariat à l'Énergie Atomique et aux Énergies Alternatives, 75015 Paris (FR)
(72) Inventeur: Dijon, Jean, 38800 Champagnier (FR); Nicolas, Pierre, 38120 Saint-Egrève (FR)
(74) Mandataire: Poulin, Gérard

(56) Documents cités:
- EP-A- 1 225 613
- EP-A- 1 429 363
- US-A1- 2004 051 468
- US-A1- 2005 001 529

## Description

### DOMAINE TECHNIQUE

L'invention concerne une structure de cathode à nanotubes utilisable dans un écran plat à émission de champ.

### ÉTAT DE LA TECHNIQUE ANTÉRIEURE

Un dispositif de visualisation par cathodoluminescence excité par émission de champ comprend une cathode ou structure émettrice d'électrons et une anode en regard recouverte d'une couche luminescente. L'anode et la cathode sont séparées par un espace où le vide a été fait.

La cathode est soit une source à base de micro-pointes, soit une source à base d'une couche émissive à faible champ seuil. La couche émissive peut être une couche de nanotubes de carbone ou d'autres structures à base de carbone ou encore à base d'autres matériaux ou de multicouches (AIN, BN).

La structure de la cathode peut être de type diode ou de type triode. Le document FR-A-2 593 953 (correspondant au brevet américain N° 4 857 161) divulgue un procédé de fabrication d'un dispositif de visualisation par cathodoluminescence excité par émission de champ. La structure de la cathode est du type triode. Le matériau émetteur d'électrons est déposé sur une couche conductrice apparente au fond de trous réalisés dans une couche isolante qui supporte une grille d'extraction des électrons.

Le document FR-A-2 836 279 divulgue une structure de cathode de type triode pour écran émissif. La structure de cathode comprend, en superposition sur un support, une électrode formant cathode électriquement connectée à un matériau émetteur d'électrons, une couche d'isolant électrique et une cathode de grille. Une ouverture pratiquée dans l'électrode de grille et une ouverture pratiquée dans la couche d'isolant électrique exposent le matériau émetteur d'électrons qui est situé dans la partie centrale de l'ouverture de l'électrode de grille. Les ouvertures sont en forme de fente et le matériau émetteur d'électrons, exposé par les fentes, est constitué d'éléments alignés selon l'axe longitudinal des fentes.

Le matériau émetteur d'électrons peut être constitué de nanotubes, par exemple des nanotubes de carbone.

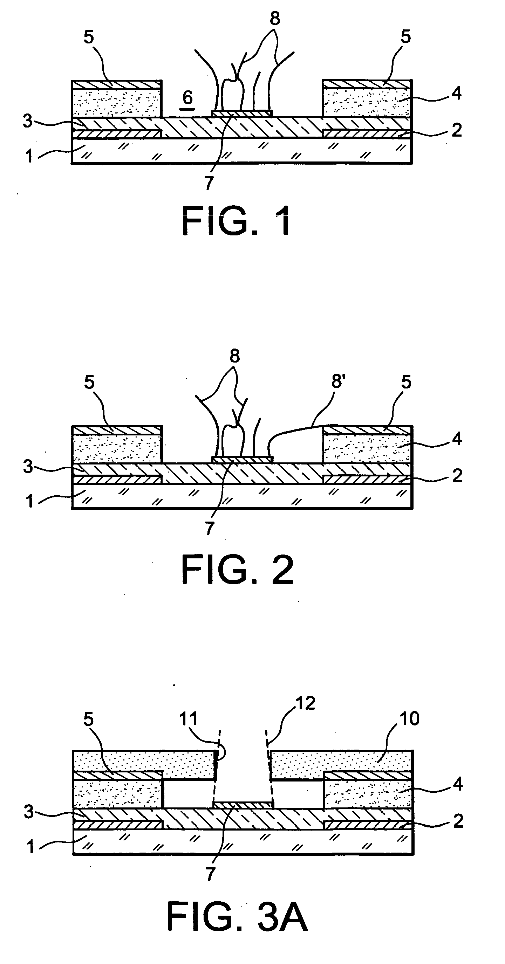

La figure 1 représente, vue en coupe et de façon schématique, une structure de cathode de type triode, telle que divulguée par le document FR-A-2 836 279. Un seul élément d'émission est représenté sur cette figure. La structure de cathode est formée sur un support 1. Elle comprend, en superposition sur le support 1, une cathode 2 supportant une couche résistive 3, une couche isolante 4 et une couche métallique 5 formant grille d'extraction des électrons. Une fente 6 expose la couche résistive 3. En partie centrale de la fente 6, et selon l'axe longitudinal de la fente, des plots de croissance 7 reposent sur la couche résistive 3. Un seul plot de croissance est visible sur la figure. Les plots de croissance 7 sont en matériau électriquement conducteur recouvert d'un catalyseur. Ils permettent la croissance de nanotubes 8, par exemple en carbone. Typiquement, un élément d'image ou pixel comporte quelques dizaines ou centaines de plots arrangés dans des fentes parallèles.

Compte tenu du mode de croissance utilisé, les nanotubes ont des longueurs et des orientations, par rapport à la cathode, qui fluctuent. Il en résulte que quelques nanotubes très longs peuvent exister et venir toucher la grille de façon aléatoire. C'est ce que montre la figure 2 où le nanotube 8' est en contact électrique avec la grille 5. Un tel contact produit plusieurs effets défavorables.

Lors de l'adressage du pixel la grille est portée à un potentiel de l'ordre de 80 V à 100 V par rapport à la cathode pour créer le champ électrique à l'extrémité du nanotube, ce champ permet l'extraction des électrons. Les nanotubes étant électriquement bon conducteurs, si l'un d'entre eux touche la grille, le plot supportant les nanotubes est porté au potentiel de la grille (à cause de la couche résistive entre la cathode et le plot), il n'y a plus d'émission. Le nombre de plots en court-circuit avec la grille varie aléatoirement d'un pixel à l'autre produisant une variation de luminance pixel à pixel qui n'est pas négligeable compte tenu du nombre relativement faible de plots par pixel.

Ce court-circuit grille cathode est limité par la présence de la couche résistive. Néanmoins, si le nombre de plots en court-circuit n'est pas très faible, il circule un courant de fuite entre la grille et la cathode qui augmente la consommation du dispositif jusqu'à empêcher son fonctionnement s'il est trop important.

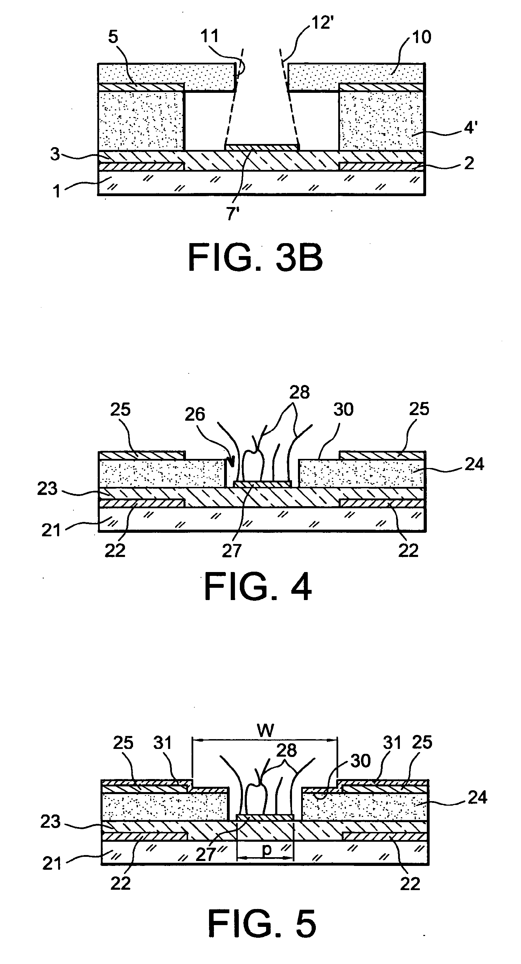

Il est par ailleurs souhaitable d'augmenter l'épaisseur de l'isolant entre la cathode et la grille pour diminuer la capacité ligne colonne et diminuer la consommation de l'écran. Le mode de dépôt du catalyseur par pulvérisation cathodique ou évaporation, compte tenu de sa divergence intrinsèque, a tendance à induire un élargissement du plot de catalyseur lorsque l'épaisseur de l'isolant augmente. Les figures 3A et 3B illustrent le mode de dépôt du catalyseur sur les plots de croissance lorsque l'épaisseur de l'isolant entre la cathode et la grille augmente. Sur ces figures, les mêmes références que sur la figure 1 représentent les mêmes éléments. Sur la figure 3A, la couche d'isolant 4 a la même épaisseur que sur la figure 1. Sur la figure 3B, la couche d'isolant, référencée 4' a une épaisseur plus grande que sur la figure 1. Le catalyseur est déposé sur le plot 7 au travers d'une ouverture 11 prévue dans une couche de résine de lift-off 10 déposée sur la structure de cathode, l'ouverture 11 étant en vis-à-vis du plot 7. Sur la figure 3A, le catalyseur est déposé sur le plot 7 selon le cône d'évaporation du catalyseur 12. Sur la figure 3B, le catalyseur est déposé sur le plot 7' selon le cône d'évaporation 12'. La base du cône 12' étant plus large que la base du cône 12, il résulte de ceci que le plot du catalyseur 7' est plus large que le plot du catalyseur 7. Il s'ensuit, pour la structure de cathode de la figure 3B, un rapprochement des nanotubes, déposés par la suite, du bord de la grille et de ce fait, les courants de fuite augmentent de façon importante. Cette structure de cathode selon l'art connu n'est donc pas optimisée pour les courants de fuite.

### EXPOSÉ DE L'INVENTION

L'invention propose une structure de cathode permettant d'optimiser les courants de fuite.

L'invention a donc pour objet une structure de cathode de type triode comprenant, en superposition sur un support, un conducteur de cathode, une couche d'isolant électrique et une électrode de grille, la couche d'isolant électrique et l'électrode de grille présentant des ouvertures révélant au moins un élément émetteur d'électrons, relié électriquement au conducteur de cathode et comprenant des nanotubes en matériau émetteur d'électrons, les ouvertures dans la couche d'isolant électrique et dans l'électrode de grille étant dimensionnées pour laisser subsister au moins une zone de la couche d'isolant électrique non recouverte par l'électrode de grille, caractérisée en ce qu'une couche résistive recouvre au moins partiellement la partie de la couche d'isolant électrique non recouverte par l'électrode de grille, cette partie étant située entre l'électrode de grille et l'ouverture de la couche d'isolant électrique révélant l'élément émetteur d'électrons.

La largeur d'ouverture dans la couche d'isolant électrique peut présenter une dimension suffisamment restreinte pour guider les nanotubes dans une direction perpendiculaire au support.

Une couche résistive peut recouvrir au moins une partie de l'électrode de grille. Ladite couche résistive peut s'étendre au moins à l'aplomb de l'ouverture de l'électrode de grille.

L'électrode de grille peut être située sur la couche résistive.

Selon un mode de réalisation, l'épaisseur de la couche d'isolant électrique est sensiblement égale à la longueur moyenne des nanotubes.

Selon un autre mode de réalisation, la couche d'isolant électrique présente, près de son ouverture, un bord d'épaisseur plus importante que l'épaisseur du reste de ladite couche. Le bord de la couche d'isolant électrique peut être compris entre l'ouverture de la couche d'isolant électrique et l'ouverture de l'électrode de grille.

Avantageusement, ledit élément émetteur d'électrons est relié électriquement au conducteur de cathode au moyen d'une couche résistive de protection.

Selon un mode particulier de réalisation, la couche d'isolant électrique comprend au moins une ouverture en forme de fente sensiblement parallèle à une ouverture correspondante de l'électrode de grille en forme de fente.

Selon un autre mode particulier de réalisation, l'ouverture de l'électrode de grille est en forme de fente et révèle au moins une rangée d'éléments émetteurs d'électrons alignés dans la direction de la fente.

Une ouverture de l'électrode de grille peut révéler une pluralité d'ouvertures dans la couche d'isolant électrique, alignées en au moins une rangée sensiblement parallèle à l'ouverture de l'électrode de grille en forme de fente.

Chaque ouverture dans la couche d'isolant électrique peut révéler au moins un élément émetteur d'électrons.

L'invention a aussi pour objet un écran plat à émission de champ, comportant une pluralité de structures de cathode telles que définies ci-dessus.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 représente, vue en coupe, une structure de cathode de type triode utilisant des nanotubes comme matériau émetteur d'électrons, selon l'art antérieur,
- la figure 2 représente la structure de cathode de la figure 1 dans laquelle un nanotube est en court-circuit avec la grille,
- les figures 3A et 3B sont des illustrations du mode de dépôt d'un catalyseur sur des plots de croissance pour une structure de cathode du type de la figure 1,
- la figure 4 est une vue en coupe illustrant une première structure de cathode à nanotubes selon la présente invention,
- la figure 5 est une vue en coupe illustrant une deuxième structure de cathode à nanotubes selon la présente invention,
- la figure 6 est une vue en coupe illustrant une troisième structure de cathode à nanotubes selon la présente invention,
- la figure 7 est une vue en coupe illustrant une quatrième structure de cathode à nanotubes selon la présente invention,
- la figure 8 est une vue en coupe illustrant une cinquième structure de cathode à nanotubes selon la présente invention,
- les figures 9 à 11 sont des vues de dessus de structures de cathodes à nanotubes selon l'invention, montrant différents motifs de grilles pouvant être utilisés,
- les figures 12A à 12G sont des vues en coupe illustrant un procédé de réalisation d'une structure de cathode à nanotubes selon l'invention,
- la figure 13 est une vue en coupe illustrant une autre structure de cathode à nanotubes selon la présente invention,
- la figure 14 est une vue en coupe illustrant encore une autre structure de cathode à nanotubes selon la présente invention,
- les figures 15A à 15G sont des vues en coupe illustrant un procédé de réalisation d'une autre structure de cathode à nanotubes selon l'invention.

### EXPOSÉ DÉTAILLÉ DE MODES DE RÉALISATION PARTICULIERS

Les exemples de réalisation qui vont maintenant être décrits concernent, à titre d'exemple, une structure de cathode à nanotubes comprenant une ouverture pratiquée dans l'électrode et une ouverture correspondante pratiquée dans la couche d'isolant électrique exposant les éléments émetteurs d'électrons. Les ouvertures sont en forme de fente, d'axe longitudinal confondu, et les éléments émetteurs d'électrons sont alignés le long de cet axe. Cette disposition correspond à l'enseignement du document FR-A-2 836 279, tel qu'illustré par les figures 1 et 2 décrites plus haut.

La figure 4 est une vue en coupe illustrant une première structure de cathode à nanotubes selon la présente invention. Un seul élément émetteur d'électrons a été représenté. La structure de cathode est formée sur un support 21. Elle comprend, en superposition sur le support 21, une cathode 22 supportant une couche résistive 23, une couche isolante 24 et une grille d'extraction des électrons 25. Des ouvertures ont été pratiquées dans la couche métallique fournissant la grille 25 et dans la couche d'isolant électrique 24. Il en résulte une fente 26 exposant la couche résistive 23 sur laquelle un plot de croissance conducteur 27 a été formé. La référence 28 représente les nanotubes, par exemple en carbone, qui ont été développés sur le plot de croissance 27.

La probabilité de contact entre les nanotubes 28 et la grille 25 a été minimisée en rapprochant l'isolant électrique 24 des plots de croissance 27. Ce rapprochement a pour effet de guider les nanotubes sur une partie de leur longueur et de rendre plus difficile un contact avec l'électrode de grille dont la dimension de l'ouverture n'a pas varié.

Cependant, la présence d'une surface isolante, comme la surface 30, en regard d'une anode peut s'avérer une source de non-fiabilité importante à cause de l'accumulation de charges électriques sur l'isolant. Cette accumulation de charges peut conduire à des arcs électriques destructeurs entre la cathode et l'anode. On peut remédier à ce problème en recouvrant l'isolant électrique d'une couche d'un matériau résistif, référencée 31 sur la figure 5. La couche de matériau résistif 31 permet en outre, si la couche 31 se prolonge sur la grille 25, de supprimer l'effet de court-circuit des nanotubes qui seraient encore capables de toucher la grille 25. Avantageusement, la résistance de la couche résistive 31 est telle, qu'en cas de contact d'un nanotube, le pont diviseur créé par la mise en série des couches résistives 31 et 23 conduit à un potentiel sur le plot 27 proche du potentiel de la cathode 22. Cela signifie que la résistance de la couche 31 est typiquement entre 10 et 100 fois supérieure à la résistance de la couche résistive ballast 23, soit de l'ordre de 10⁹ à 10¹⁰ ohms par carré contre 10⁸ ohms par carré pour la couche résistive ballast 23.

La distance entre le bord de la grille 25 et l'ouverture pratiquée dans la couche isolante 24 est ajustable de quelques dizaines de nm à (W-p)/2, où W est la largeur de l'ouverture de grille et p la largeur du plot de croissance 27 (voir la figure 5). Typiquement, W = 10 µm et p = 5 µm.

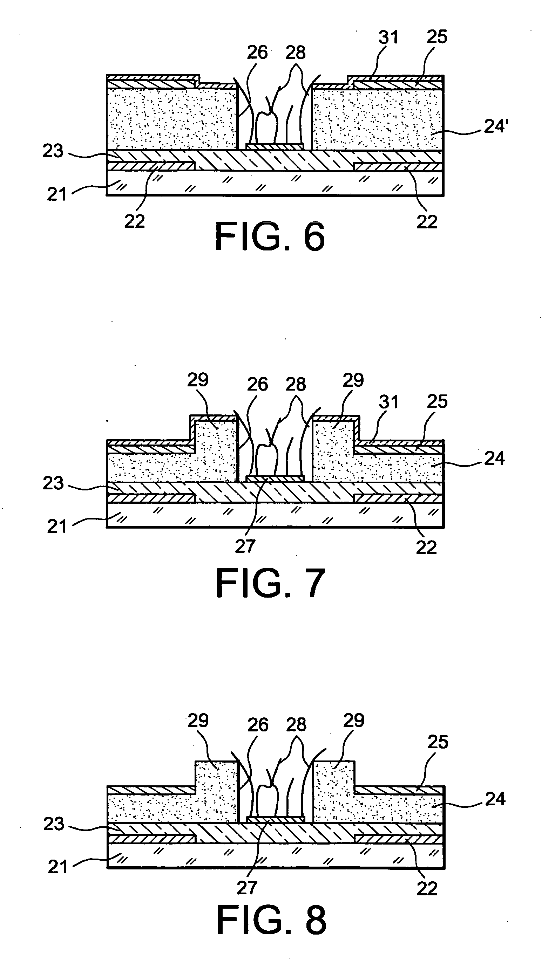

Selon une autre variante de réalisation, l'épaisseur de la couche d'isolant électrique peut être augmentée de façon que la longueur moyenne des nanotubes soit par exemple égale à l'épaisseur de la couche isolante. C'est ce que représente la figure 6 où les mêmes éléments que sur la figure 5 sont référencés à l'identique, à l'exception de la couche isolante 24' qui est plus épaisse que la couche isolante 24 de la figure 5.

Dans une structure de cathode, l'épaisseur de la couche d'isolant électrique peut être choisie de manière à diminuer la capacité du dispositif incorporant la structure de cathode, indépendamment d'une considération sur la longueur des nanotubes. L'invention résout bien le problème du rapprochement des nanotubes de la grille lorsque l'épaisseur de la couche d'isolant électrique augmente. En effet, le catalyseur peut éventuellement recouvrir partiellement les flancs de l'ouverture pratiquée dans la couche d'isolant sans induire de problème de court-circuit.

Selon une autre variante de réalisation, l'épaisseur de la couche d'isolant électrique peut n'être augmentée qu'à proximité des nanotubes. C'est ce que représente la figure 7 qui reprend les mêmes références pour les éléments identiques à ceux de la figure 5. La référence 29 désigne la partie de la couche d'isolant électrique d'épaisseur augmentée. Sur la figure 7, la partie 29 est comprise entre l'ouverture de la grille et l'ouverture de l'isolant électrique. La couche résistive 31 peut ne recouvrir que partiellement la couche d'isolant électrique. Elle peut aussi être supprimée comme cela est visible sur la figure 8 où les mêmes références qu'à la figure 7 représentent les mêmes éléments.

Parmi les avantages apportés par l'invention, outre la résolution du problème de courant de fuite, on peut mentionner une plus grande efficacité de la structure au niveau du champ électrique créé au sommet des nanotubes. En effet, le potentiel de grille est rapproché des nanotubes grâce à la couche résistive 31 présente sur la grille 25, donc le champ induit est plus fort à tension donnée.

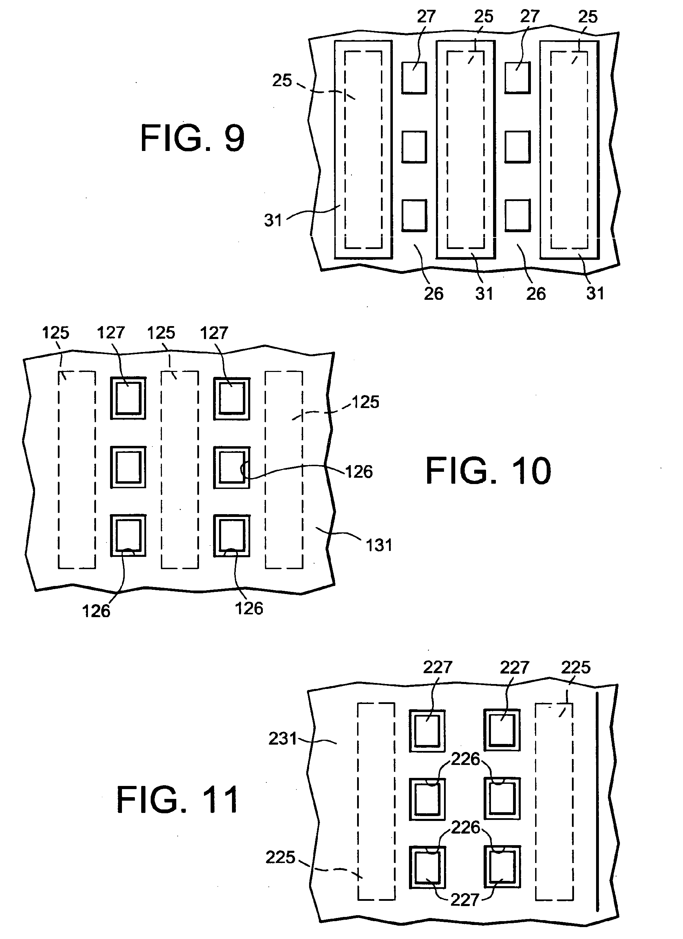

Les figures 9, 10 et 11 sont des vues de dessus des structures de cathodes à nanotubes selon l'invention, montrant différents motifs de grilles pouvant être utilisés.

La figure 9 est une vue de dessus correspondant à la variante de réalisation représentée à la figure 5. Cette figure montre des plots 27 de croissance des nanotubes, disposés en alignement selon l'axe longitudinal des fentes 26. On reconnaît également les conducteurs de grille 25 sous les couches de matériau résistif 31. Les ouvertures de la couche résistive sont des fentes (à l'aplomb des ouvertures de l'isolant), chaque fente comportant une pluralité de plots 27.

La figure 10 est une vue de dessus montrant un autre motif pour une structure de cathode selon l'invention. Les plots 127 de croissance des nanotubes sont ici formés dans des puits 126 à raison d'un plot par puits. Les puits correspondent à des ouvertures réalisées dans la couche résistive et la couche d'isolant. Ils sont situés dans cet exemple à égales distances des conducteurs de grille 125 adjacents. La couche résistive recouvre par ailleurs les conducteurs de grille. Cette structure a pour avantage, entre autres, de diminuer la consommation par rapport à la structure de la figure 9. En effet, le potentiel de grille est rapproché des nanotubes grâce à la couche résistive. Pour obtenir un champ équivalent, une tension plus faible peut être appliquée.

La figure 11 est une vue de dessus montrant encore un autre motif pour une structure de cathode selon l'invention. Cette fois, deux rangées de plots 227 de croissance de nanotubes sont formés dans des puits à raison d'un plot par puits. Les puits correspondent à des ouvertures réalisées dans la couche résistive et la couche isolante. Deux rangées de plots successives étant comprises entre un premier conducteur de grille 225 et un deuxième conducteur de grille 225. La présence de la couche résistive autour de chaque plot permet l'application de la tension grille autour du plot. Cette variante permet d'obtenir un taux de remplissage de la surface en plots plus grand. Elle permet d'avoir plus de plots par pixel d'où une meilleure uniformité de l'écran et un courant plus important.

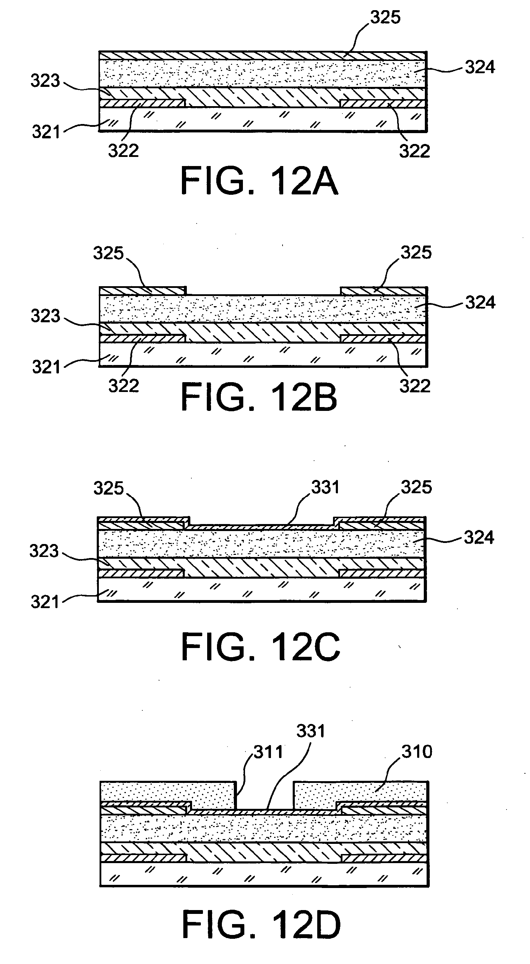

Les figures 12A à 12G sont des vues en coupe illustrant un procédé de réalisation d'une structure de cathode à nanotubes selon l'invention.

La figure 12A montre un support 321, par exemple en verre, sur lequel on a réalisé, par des opérations de dépôt et de gravure, des conducteurs de cathode 322. Ces conducteurs de cathode peuvent être en molybdène, en cuivre ou en alliage de tungstène et de titane. Ils forment par exemple les colonnes d'un écran de visualisation. Sur l'empilement obtenu, on dépose une couche résistive de protection 323 (ou couche ballast), par exemple une couche de silicium amorphe d'épaisseur comprise entre 0,5 µm et 2 µm. On dépose ensuite une couche isolante 324, par exemple une couche de silice d'épaisseur comprise entre 1 µm et 3 µm. On dépose enfin une couche conductrice de grille 325, par exemple en molybdène ou en cuivre.

La couche conductrice de grille 325 est gravée pour former les ouvertures dans les conducteurs de grille et révéler la couche isolante 324 (voir la figure 12B).

Une couche résistive 331 est ensuite déposée sur les conducteurs de grille 325 et la partie révélée de la couche isolante 324 (voir la figure 12C). La couche résistive 331 peut être une couche de silicium amorphe très résistive ou une couche de DLC (pour « Diamond Like Carbon »). Si cette couche est en silicium amorphe, sa résistivité est au moins 10 fois supérieure à la résistivité de la couche ballast et son épaisseur est de quelques centaines de nm, de façon à présenter une résistance électrique 100 fois plus élevée que la résistance de la couche ballast.

Une couche de résine 310 est ensuite déposée sur la structure obtenue. Une ouverture 311 est pratiquée dans la couche de résine, au centre de l'ouverture de grille jusqu' à révéler la couche résistive 331. La dimension de l'ouverture 311 est adaptée à la dimension du plot de croissance à réaliser (voir la figure 12D).

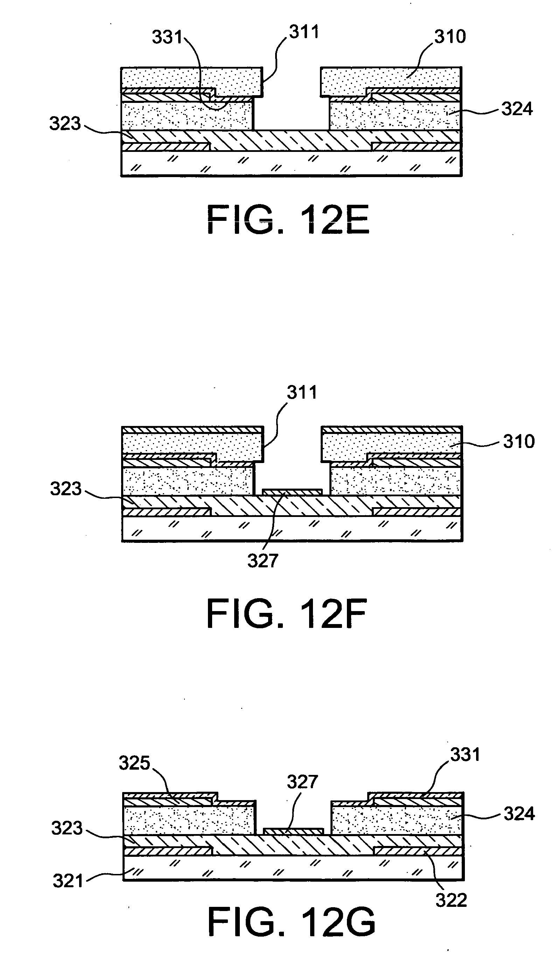

Par l'ouverture 311 de la couche de résine 310, la couche résistive 331 et la couche d'isolant électrique 324 sont gravées jusqu' à révéler la couche ballast 323 (voir la figure 12E). Eventuellement, une surgravure latérale de la couche d'isolant 324 et de la couche résistive peut être réalisée comme le montre la figure 12E.

Par l'ouverture 311 encore, un plot 327 (métal et catalyseur) est déposé au fond de l'ouverture pratiquée dans la couche d'isolant électrique, sur la couche ballast 323 (voir la figure 12F). Les plots font typiquement 5 µm X 5 µm.

La couche de résine est ensuite éliminée par une technique de « lift-off » pour fournir la structure montrée à la figure 12G. On peut alors procéder à la croissance des nanotubes sur le plot 327.

La couche résistive peut éventuellement être située sous les conducteurs de grille. Ce cas est envisageable lorsque la grille est suffisamment en retrait pour que les nanotubes ne puissent pas court-circuiter les conducteurs de grille. Il s'agit alors de remédier au problème de l'accumulation des charges électriques sur l'isolant.

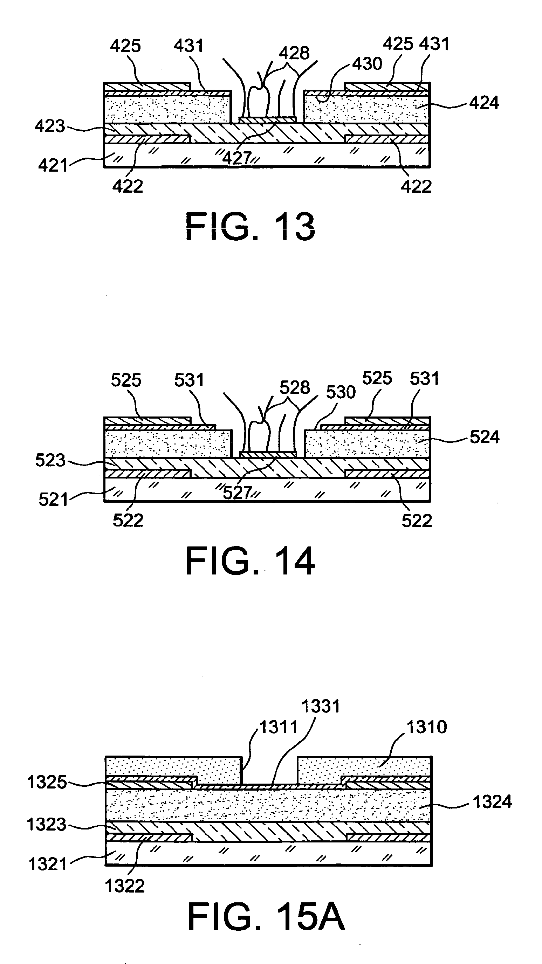

La figure 13 est une vue en coupe illustrant une telle structure de cathode à nanotubes selon la présente invention. Sur cette figure, les mêmes éléments que sur la figure 5 sont numérotés avec le nombre 400 en plus. On voit sur la figure 13 que la couche résistive 431 est située sous les conducteurs de grille 425 et parvient à l'aplomb de la fente réalisée dans l'isolant électrique.

La figure 14 est une vue en coupe illustrant une autre structure de cathode à nanotubes selon la présente invention. Sur cette figure, les mêmes éléments que sur la figure 5 sont numérotés avec le nombre 500 en plus. On voit sur la figure 14 que la couche résistive 531 est située, comme précédemment, sous les conducteurs de grille 525 et qu'elle est en retrait par rapport à la fente réalisée dans l'isolant électrique.

Les figures 15A à 15G sont des vues en coupe illustrant un procédé de réalisation d'une autre structure de cathode à nanotubes selon l'invention. Cette structure de cathode a sa couche résistive sur les conducteurs de grille et cette couche résistive est en retrait par rapport à la fente réalisée dans l'isolant électrique. Sur les figures 15A à 15G, les mêmes éléments que sur les figures 12A à 12G sont numérotés avec le nombre 1000 en plus. Les premières étapes de ce procédé sont identiques aux premières étapes du procédé illustré par les figures 12A à 12G et ne seront donc pas représentées. Ainsi, la figure 15A est identique à la figure 12D.

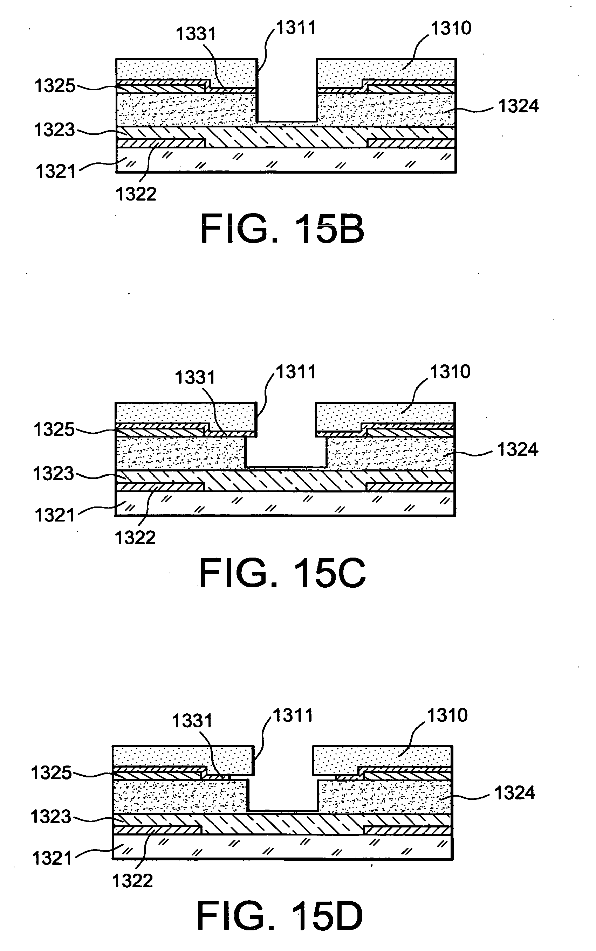

Par l'ouverture 1311 de la couche de résine 1310, la couche résistive 1331, par exemple en silicium, et la couche d'isolant électrique 1324, par exemple en SiO₂, sont gravées par une technique RIE (gravure ionique réactive) sans atteindre le niveau inférieur de la couche d'isolant électrique 1324 (voir la figure 15B).

On procède ensuite à une gravure chimique de la couche d'isolant électrique 1324 pour obtenir un retrait de l'isolant par rapport à la couche résistive 1331 tout en conservant au fond de l'ouverture 1311 une couche d'isolant électrique de protection (voir la figure 15C).

On procède ensuite à la surgravure de la couche résistive 1331 par attaque chimique. Si la couche résistive 1331 est en silicium, l'attaque chimique peut être réalisée grâce à un mélange de HNO₃ (50% en volume), de HF (1% en volume) et de H₂O (49% en volume). La couche 1331 est alors en retrait par rapport à l'ouverture faite dans la couche d'isolant électrique 1324 (voir la figure 15D).

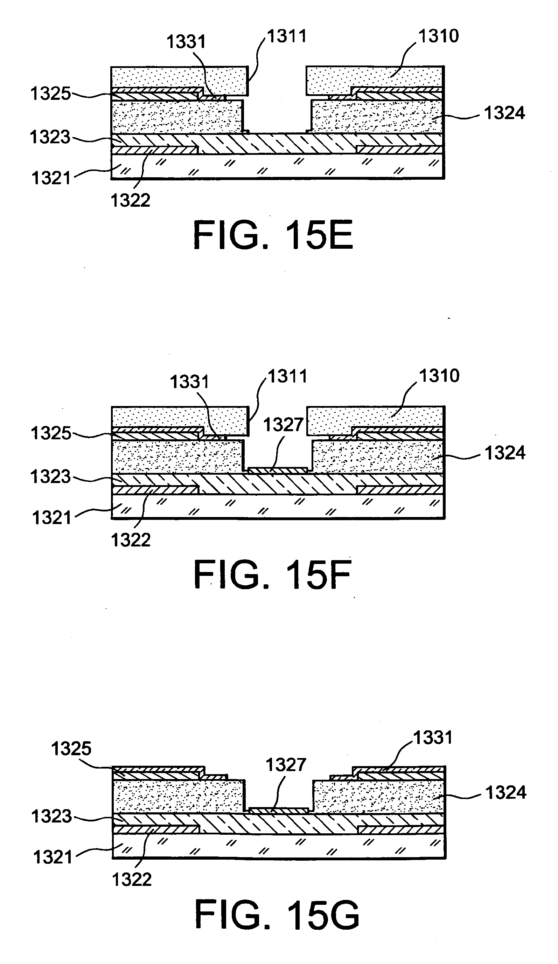

On procède ensuite à la gravure du fond de l'ouverture pratiquée dans la couche d'isolant électrique 1324 jusqu'à révéler la couche ballast 1323, par exemple par gravure RIE. La structure obtenue est illustrée par la figure 15E. On aurait pu utiliser une gravure humide pour graver le fond de l'ouverture pratiquée dans la couche d'isolant électrique.

Par l'ouverture 1311, un plot 1327 (métal et catalyseur) est déposé au fond de l'ouverture pratiquée dans la couche d'isolant électrique 1324, sur la couche ballast 1323 (voir la figure 15F).

La couche de résine est ensuite éliminée par une technique de « lift-off » pour fournir la structure montrée à la figure 15G. On peut alors procéder à la croissance des nanotubes sur le plot 1327.

## Revendications

1. Structure de cathode de type triode comprenant, en superposition sur un support (21), un conducteur de cathode (22), une couche d'isolant électrique (24) et une électrode de grille (25), la couche d'isolant électrique et l'électrode de grille présentant des ouvertures (26) révélant au moins un élément émetteur d'électrons, relié électriquement au conducteur de cathode (22) et comprenant des nanotubes (28) en matériau émetteur d'électrons, les ouvertures dans la couche d'isolant électrique et dans l'électrode de grille étant dimensionnées pour laisser subsister au moins une zone de la couche d'isolant électrique non recouverte par l'électrode de grille, **caractérisée en ce qu'**une couche résistive (31) recouvre au moins partiellement la partie de la couche d'isolant électrique (24) non recouverte par l'électrode de grille, cette partie étant située entre l'électrode de grille (25) et l'ouverture (26) de la couche d'isolant électrique révélant l'élément émetteur d'électrons.

2. Structure de cathode selon la revendication 1, dans laquelle la largeur d'ouverture dans la couche d'isolant électrique (24) présente une dimension suffisamment restreinte pour guider les nanotubes (28) dans une direction perpendiculaire au support (21).

3. Structure de cathode selon l'une des revendications 1 ou 2, dans laquelle la couche résistive (31) recouvre au moins une partie de l'électrode de grille (25).

4. Structure de cathode selon la revendication 3, dans laquelle ladite couche résistive s'étend au moins à l'aplomb de l'ouverture de l'électrode de grille.

5. Structure de cathode selon la revendication 1, dans laquelle l'électrode de grille (425) est située sur la couche résistive (431).

6. Structure de cathode selon l'une quelconque des revendications 1 à 5, dans laquelle l'épaisseur de la couche d'isolant électrique (24') est sensiblement égale à la longueur moyenne des nanotubes (28).

7. Structure de cathode selon l'une quelconque des revendications 1 à 5, dans laquelle la couche d'isolant électrique (24) présente, près de son ouverture, un bord (29) d'épaisseur plus importante que l'épaisseur du reste de ladite couche.

8. Structure de cathode selon la revendication 7, dans laquelle le bord (29) de la couche d'isolant électrique (24) est compris entre l'ouverture de la couche d'isolant électrique (24) et l'ouverture de l'électrode de grille (25).

9. Structure de cathode selon l'une quelconque des revendications 1 à 8, dans laquelle ledit élément émetteur d'électrons est relié électriquement au conducteur de cathode (22) au moyen d'une couche résistive de protection (23).

10. Structure de cathode selon l'une quelconque des revendications 1 à 9, dans laquelle la couche d'isolant électrique comprend au moins une ouverture en forme de fente sensiblement parallèle à une ouverture correspondante de l'électrode de grille en forme de fente.

11. Structure de cathode selon l'une quelconque des revendications 1 à 9, dans laquelle l'ouverture de l'électrode de grille est en forme de fente et révèle au moins une rangée d'éléments émetteurs d'électrons (127, 227) alignés dans la direction de la fente.

12. Structure de cathode selon la revendication 10, dans laquelle une ouverture de l'électrode de grille révèle une pluralité d'ouvertures dans la couche d'isolant électrique, alignées en au moins une rangée sensiblement parallèle à l'ouverture de l'électrode de grille en forme de fente.

13. Structure de cathode selon la revendication 12, dans laquelle chaque ouverture dans la couche d'isolant électrique révèle au moins un élément émetteur d'électrons.

14. Ecran plat à émission de champ, comportant une pluralité de structures de cathode selon l'une quelconque des revendications 1 à 13.

## Claims

1. Triode type cathode structure comprising a cathode conductor (22), an electrical insulation layer (24) and a grid electrode (25), superposed on a support (21), the electrical insulation layer and the grid electrode comprising openings (26) exposing at least one electron emitting element, electrically connected to the cathode conductor (22) and comprising nanotubes (28) made of an electron emitting material, the openings in the electrical insulation layer and in the grid electrode being sized so as to allow at least one area of the electrical insulation layer not covered by the grid electrode to subsist, **characterized in that** a resistive layer (31) at leat partially covers the part of the electrical insulation layer (24) not covered by the grid electrode, this part being located between the grid electrode (25) and the opening (26) of the electrical insulation layer exposing the electron emitting element.

2. Cathode structure set forth in claim 1, in which the opening width in the electrical insulation layer (24) is sufficiently small to guide the nanotubes (28) in a direction perpendicular to the support (21).

3. Cathode structure set forth in either of claim 1 or 2, in which the resistive layer (31) covers at least part of the grid electrode (25) .

4. Cathode structure set forth in claim 3, in which said resistive layer extends at least vertically in line with the opening in the grid electrode.

5. Cathode structure set forth in claim 1, in which the grid electrode (425) is located on the resistive layer (431).

6. Cathode structure set forth in any one of claims 1 to 5, in which the thickness of the electrical insulation layer (24') is approximately equal to the average length of the nanotubes (28).

7. Cathode structure set forth in any one of claims 1 to 5, in which the edge (29) of the electrical insulation layer (24) close to its opening is thicker than the remainder of said layer.

8. Cathode structure set forth in claim 7, in which the edge (29) of the electrical insulating layer (24) is between the opening in the electrical insulation layer (24) and the opening in the grid electrode (25).

9. Cathode structure set forth in any one of claims 1 to 8, in which said electron emitting element is electrically connected to the cathode conductor (22) through a resistive protection layer (23).

10. Cathode structure set forth in any one of claims 1 to 9, in which the electrical insulation layer comprises at least one slot-shaped opening substantially parallel to a corresponding slot-shaped opening in the grid electrode.

11. Cathode structure set forth in any one of claims 1 to 9, in which the opening in the grid electrode is in the shape of a slot and exposes at least one row of electron emitting elements (127, 227) aligned in the direction of the slot.

12. Cathode structure set forth in claim 10, in which an opening in the grid electrode reveals a plurality of opening in the electrical insulation layer, aligned in at least one row substantially parallel to the opening in the slot-shaped grid electrode.

13. Cathode structure set forth in claim 12, in which each opening in the electric insulation layer reveals at least one electron emitting element.

14. Flat field emission screen, comprising a plurality of cathode structures set forth in any one of claims 1 to 13.

## Patentansprüche

1. Kathodenstruktur des Typs Triode, umfassend, auf einem Substrat (21), einen Kathodenleiter (22), eine elektrische Isolationsschicht (24) und eine Gitterelektrode (25), wobei die elektrische Isolationsschicht und die Gitterelektrode Öffnungen (26) aufweisen, die wenigstens ein Elektronenemissionselement offenlegen, das elektrisch mit dem Kathodenleiter (22) verbunden ist und Nanoröhren (28) aus elektronenemittierendem Material umfasst, wobei die Öffnungen in der elektrischen Isolationsschicht und in der Gitterelektrode so dimensioniert sind, dass wenigstens noch eine nicht von der Gitterelektrode bedeckte Zone der elektrischen Isolationsschicht vorhanden ist,
**dadurch gekennzeichnet, dass** eine resistive Schicht (31) wenigstens den nicht von der Gitterelektrode bedeckten Teil der elektrischen Isolationsschicht (24) partiell bedeckt, wobei dieser Teil sich zwischen der Gitterelektrode (25) und der Öffnung (26) der das Elektronenemissionselement offenlegenden elektrischen Isolationsschicht befindet.

2. Kathodenstruktur nach Anspruch 1, bei der die Breite der Öffnung in der elektrischen Isolationsschicht (24) eine ausreichend eng begrenzte Abmessung aufweist, um die Nanoröhren (28) in einer zum Substrat (21) senkrechten Richtung zu führten.

3. Kathodenstruktur nach einem der Ansprüche 1 oder 2, bei die resistive Schicht (31) wenigstens einen Teil der Gitterelektrode (25) bedeckt.

4. Kathodenstruktur nach Anspruch 3, bei der die resistive Schicht sich mindestens bis zur senkrechten Bündigkeit mit der Öffnung in der Gitterelektrode erstreckt.

5. Kathodenstruktur nach Anspruch 1, bei die Gitterelektrode (425) sich auf der resistiven Schicht (431) befindet.

6. Kathodenstruktur nach einem der Ansprüche 1 bis 5, bei der die Dicke der elektrischen Isolationsschicht (24') im Wesentlichen gleich der mittleren Länge der Nanoröhren (28) ist.

7. Kathodenstruktur nach einem der Ansprüche 1 bis 5, bei der die elektrische Isolationsschicht (24) nahe ihrer Öffnung einen Rand (29) von geringerer Dicke als der Dicke des Rests der genannten Schicht aufweist.

8. Kathodenstruktur nach Anspruch 7, bei der der Rand (29) der elektrischen Isolationsschicht (24) enthalten ist zwischen der Öffnung der elektrischen Isolationsschicht (24) und der Öffnung der Gitterelektrode (25).

9. Kathodenstruktur nach einem der Ansprüche 1 bis 8, bei der das genannte Elektronenemissionselement durch eine resistive Schutzschicht (23) elektrisch verbunden ist mit dem Kathodenleiter (22).

10. Kathodenstruktur nach einem der Ansprüche 1 bis 9, bei der die elektrische Isolationsschicht wenigstens eine schlitzförmige Öffnung umfasst, im Wesentlichen parallel zu einer entsprechenden schlitzförmigen Öffnung der Gitterelektrode.

11. Kathodenstruktur nach einem der Ansprüche 1 bis 9, bei der die Öffnung der Gitterelektrode schlüzförmig ist und wenigstens eine Reihe in Richtung des Schlitzes angeordneter Elektronenemissionselemente (127, 227) offenlegt,

12. Kathodenstruktur nach Anspruch 10, bei der eine Öffnung der Gitterelektrode eine Vielzahl Öffnungen in der elektrischen Isolationsschicht offenlegt, die in wenigstens einer zur schlitzförmigen Öffnung der Gitterelektrode im Wesentlichen parallelen Reihe angeordnet sind.

13. Kathodenstruktur nach Anspruch 12, bei der jede Öffnung in der elektrischen Isolationsschicht wenigstens ein Elektronenemissionselement offenlegt.

14. Feldemissions-Flachbildschirm mit einer Vielzahl von Kathodenstrukturen nach einem der Ansprüche 1 bis 13.
